Europäisches Patentamt

European Patent Office

Office européen des brevets

(19)

(11) **EP 1 564 926 A1**

(12) **EUROPÄISCHE PATENTANMELDUNG**

(43) Veröffentlichungstag:
**17.08.2005 Patentblatt 2005/33**

(51) Int Cl.⁷: **H04L 7/04**

(21) Anmeldenummer: **04003531.3**

(22) Anmeldetag: **17.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT 80333 München (DE)**

(72) Erfinder:
• **Martinez, Javier Murcia 81673 München (DE)**
• **Rademacher, Leo, Dr. 83607 Holzkirchen (DE)**

(54) **Verfahren zur Bestimmung einer zeitlichen Synchronisation in einem Funkkommunikationssystem**

(57)    Die Erfindung betrifft ein Verfahren zur Bestimmung einer zeitlichen Synchronisation zwischen einer empfangenen Trainingssequenz und einer Referenztrainingssequenz in einem Funkkommunikationssystem.

Bei einer ersten Subkorrelation wird die empfangene Trainingssequenz mit einer der empfangenen Trainingssequenz entsprechenden ersten Referenztrainingssequenz korreliert und aus dabei berechneten Korrelationsprodukten wird ein zeitabhängiger erster Subkorrelationswert bestimmt. Bei zumindest einer weiteren Subkorrelation wird die empfangene Trainingssequenz mit einer sich von der ersten Referenztrainingssequenz unterscheidenden weiteren Referenztrainingssequenz korreliert und aus den dabei berechneten Korrelationsprodukten wird ein weiterer zeitabhängiger Subkorrelationswert berechnet. Der erste und der zumindest eine weitere Subkorrelationswert werden zu einem resultierenden Subkorrelationswert überlagert, der zur Bestimmung der zeitlichen Synchronisation verwendet wird.

FIG 4

EP 1 564 926 A1

**Beschreibung**

Die Erfindung betrifft ein Verfahren zur Bestimmung einer zeitlichen Synchronisation zwischen einer empfangenen Trainingssequenz und einer Referenztrainingssequenz in einem Funkkommunikationssystem.

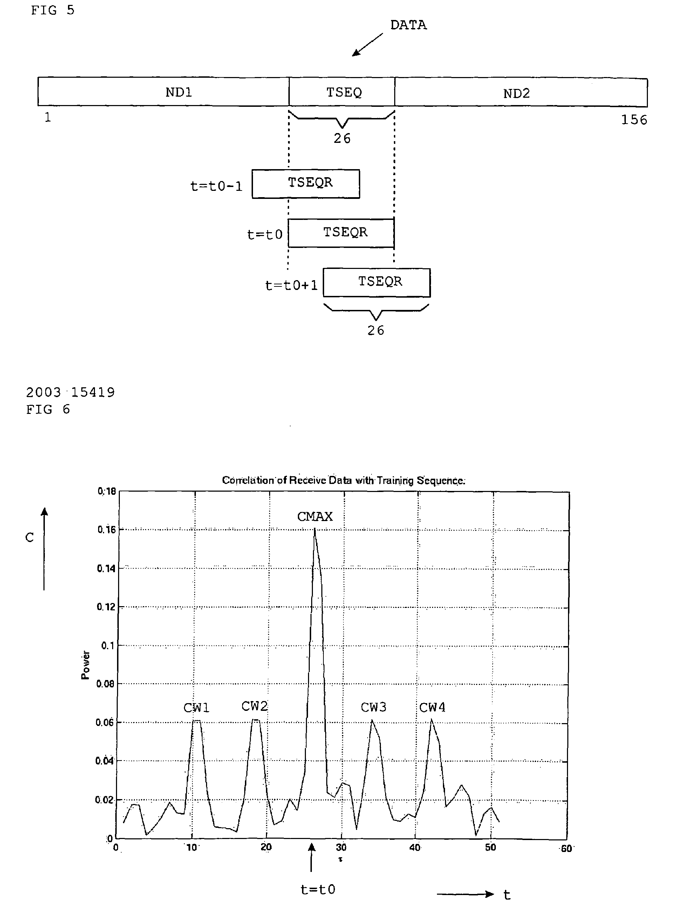

Anhand eines GSM-Funkübertragungssystems wird in FIG 5 beispielhaft ein dem Stand der Technik entsprechendes Verfahren zur Bestimmung der zeitlichen Lage einer Trainingssequenz gezeigt.

Ein in einem Zeitschlitz übertragener Datenblock DATA eines Teilnehmer-Empfangssignals weist 156 Symbole auf. Dabei ist im Datenblock DATA eine dem Teilnehmer spezifisch zugeordnete Trainingssequenz TSEQ mit einer Länge von 26 Symbolen angeordnet. Vor und nach der Trainingssequenz TSEQ werden Nutzdaten ND1 und ND2 innerhalb des Datenblocks DATA funkübertragen.

Um die Nutzdaten ND1 und ND2 dekodieren zu können, wird mit Hilfe eines Korrelationsverfahrens die zeitliche Lage der empfangenen Trainingssequenz TSEQ innerhalb des Teilnehmer-Empfangssignals bzw. innerhalb des dem Teilnehmer zugeordneten Zeitschlitzes ermittelt. Bei der Korrelation wird eine Referenztrainingssequenz TSEQR verwendet. Die ebenfalls 26 Symbole der Referenztrainingssequenz TSEQR entsprechen den Symbolen der Trainingssequenz TSEQ, die dem Teilnehmer spezifisch zugeordnet ist.

Zu verschiedenen Zeitpunkten $t \in \{...,t0-2, t0-1, t0, t0+1,...\}$ wird zur Bestimmung von Korrelationswerten C die Referenztrainingssequenz TSEQR mit der empfangenen Trainingssequenz TSEQ korreliert, wobei zu jedem Zeitpunkt t die Referenztrainingssequenz TSEQR in Bezug auf die empfangene Trainingssequenz TSEQ symbolweise verschoben wird.

Beispielhaft zeigt FIG 6 in Bezug auf FIG 5 entsprechend ermittelte zeitabhängige Korrelationswerte C. Bei einem Zeitpunkt $t=t0$ sind die beiden Trainingssequenzen TSEQ und TSEQR zeitsynchron zueinander, wodurch sich ein maximaler Korrelationswert CMAX ergibt.

Bei den Korrelationsverfahren wird zwischen sogenannten "Look For Maximum"-Korrelationsverfahren (LFM) und sogenannten "Window Energy"-Korrelationsverfahren unterschieden. Während beim LFM-Korrelationsverfahren ein maximaler Korrelationswert CMAX als Absolutwert bestimmt wird, wird beim zweiten Korrelationsverfahren ein Suchfenster zur Ermittlung des maximalen Korrelationswerts CMAX verwendet.

Eine Bestimmungsgenauigkeit des Zeitpunkts $t=t0$, der dem maximalen Korrelationswert CMAX zugeordnet ist, wird im allgemeinen durch zwei Effekte negativ beeinflusst. Zum einen ergeben sich aufgrund von Vielfachreflexionen bei der Signalausbreitung störende weitere Korrelationswerte CW, die in etwa die Größenordnung des maximalen Korrelationswerts CMAX aufweisen können. Dadurch können Fehler bei der Bestimmung des Zeitpunkts t0 verursacht werden.

Zum anderen treten für den Fall, dass die Symbole der Nutzdaten ND1 und ND2 zumindest teilweise den Symbolen der Trainingssequenz TSEQ entsprechen, als "Korrelationsrauschen" bezeichnete, ebenfalls zusätzliche störende Korrelationswerte CW auf. Beispielhaft zeigt FIG 5 insgesamt vier störende Korrelationswerte CW1 bis CW4.

Es ist Aufgabe der vorliegenden Erfindung, ein auf einem Korrelationsverfahren basierendes zeitliches Synchronisationsverfahren in der Genauigkeit zu verbessern.

Die Aufgabe der vorliegenden Erfindung wird durch die Merkmale des Patentanspruchs 1 gelöst. Vorteilhafte Weiterbildungen sind in den Unteransprüchen angegeben.

Beim erfindungsgemäßen Verfahren wird anstelle einer Korrelation mit lediglich einer Referenztrainingssequenz, deren Symbole in Anzahl und Wert der empfangenen Trainingssequenz entsprechen, eine Vielzahl an Subkorrelationen mit jeweils unterschiedlichen Referenztrainingssequenzen durchgeführt. In Bezug auf die empfangene Trainingssequenz weisen die erfindungsgemäß verwendeten Referenztrainingssequenzen eine verringerte Anzahl an Symbolen auf, die einen Beitrag zur Bildung von Subkorrelationswerten bei den jeweils durchzuführenden Subkorrelationen bilden.

Erreicht wird dies beispielsweise dadurch, dass bei einer ersten Referenztrainingssequenz für eine durchzuführende erste Subkorrelation einer ausgewählten ersten Anzahl an Symbolen ein logischer Wert "0" zugewiesen wird, wodurch diese Symbole keinen Beitrag bei der Bildung von Korrelationsprodukten bzw. -werten bilden.

Entsprechend wird bei einer zweiten Referenztrainingssequenz für eine durchzuführende zweite Subkorrelation einer weiteren zweiten ausgewählten Anzahl an Symbolen ebenfalls der logische Wert "0" zugewiesen, usw.

Vorteilhafterweise wird sowohl die Anzahl als auch die Lage dieser gewählten Symbole in den Referenztrainingssequenzen jeweils unterschiedlich gewählt.

Ebenfalls ist es möglich, bei der ersten Subkorrelation alle Symbole einer der empfangenen Trainingssequenz entsprechenden Referenztrainingssequenz zu verwenden und bei der zweiten Subkorrelation diese Symbolanzahl zu reduzieren. Diese Reduzierung der Symbole in den einzelnen Referenztrainingssequenzen wird für eine dritte, vierte, ..., usw. Subkorrelation entsprechend fortgesetzt.

Das erfindungsgemäße Korrelationsverfahren wird mit einer variierenden Anzahl an Symbolen bei den Referenztrainingssequenzen bis zum Erreichen einer Mindestsymbolanzahl wiederholt.

Die bei den Subkorrelationen gebildeten Subkorrelationswerten wird durch Überlagerung ein resultierender Korrelationswert gebildet. Dabei wird erfindungsgemäße Korrelationsverfahren solange fortgesetzt, bis eine gewünschte Genauigkeit beim resultierenden Korrelationswert erreicht wird.

Durch das erfindungsgemäße Verfahren variieren bei den einzelnen Subkorrelationen sowohl die Maxima der entsprechend zugeordneten zeitabhängigen Subkorrelationswerte als auch die zeitliche Lage der maximalen Subkorrelationswerte.

Zur Bildung des resultierenden zeitabhängigen Korrelationswerts werden die zeitabhängigen Subkorrelationswerte beispielsweise durch Multiplikation überlagert, wodurch ein eindeutig detektierbarer maximaler Korrelationswert zu einem eindeutigen Zeitpunkt t=t0 detektierbar wird.

Da durch die Multiplikation störende Korrelationswerte unterdrückt werden, wird die Genauigkeit bei der Bestimmung der zeitlichen Lage des zu detektierenden maximalen Korrelationswerts wesentlich erhöht.

Durch das erfindungsgemäße Verfahren werden in einer vorteilhaften Weiterbildung die eingangs beschriebenen störenden Korrelationswerte, die als Korrelationsrauschen bezeichnet werden, mit geringem Aufwand unterdrückt. Anhand einer durchgeführten früheren Synchronisation sind Übergänge zwischen Nutzdatenbereich einerseits und Trainingssequenzbereich andererseits zumindest näherungsweise bekannt.

Da störende Synchronisationswerte dann entstehen, wenn Symbole der Trainingssequenz bzw. der Referenztrainingssequenz im Übergangsbereich zumindest teilweise den Symbolen der Nutzdaten entsprechen, werden erfindungsgemäß die Übergangsbereiche bei der Bildung des resultierenden Korrelationswertes nicht betrachtet.

Beispielsweise werden die entsprechenden Korrelationsprodukte verworfen oder es werden die Symbole am Anfang und am Ende der Referenztrainingssequenz derart gewählt, dass im Übergangsbereich kein Beitrag zur Berechnung der Subkorrelationswerte gebildet wird. Alternativ werden bei der Überlagerung der Subkorrelationswerte die entsprechenden Übergangsbereiche nicht berücksichtigt.

Das erfindungsgemäße Verfahren wird im Folgenden anhand einer Zeichnung näher erläutert. Dabei zeigen:

FIG 1a, b    einen prinzipiellen Ablauf einer ersten Subkorrelation mit zugeordnetem ersten zeitabhängigen Subkorrelationswert,

FIG 2a, b    einen prinzipiellen Ablauf einer zweiten Subkorrelation mit zugeordnetem zweiten Subkorrelationswert,

FIG 3    einen in Bezug auf FIG 1 und FIG 2 resultierenden Korrelationswert,

FIG 4    eine beispielhafte Variation der Referenztrainingssequenzen in Bezug auf eine empfangene Trainingssequenz,

FIG 5    den prinzipiellen Ablauf der in der Beschreibungseinleitung beschriebenen Korrelation, und

FIG 6    den FIG 5 zugeordneten zeitabhängigen Korrelationswert.

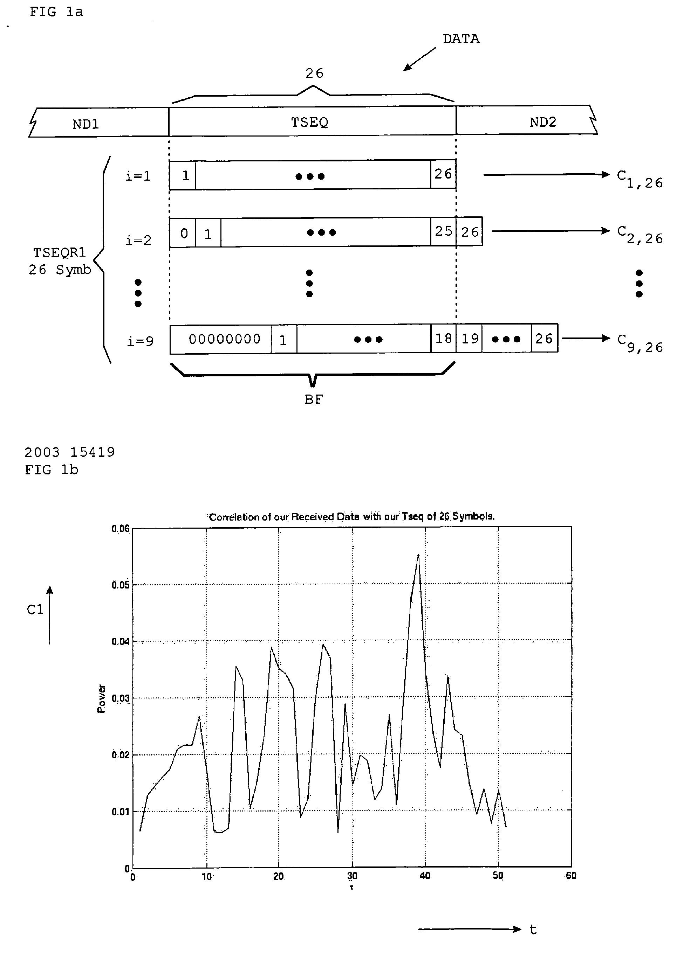

FIG 1 zeigt einen prinzipiellen Ablauf einer ersten Subkorrelation in FIG 1a mit zugeordnetem ersten zeitabhängigen Subkorrelationswert C1 in FIG 1b.

Bei der ersten Subkorrelation wird eine innerhalb eines Datensignals DATA zwischen zwei Nutzdatenblöcken ND1, ND2 ausgesandte und empfangene Trainingssequenz TSEQ mit 26 Symbolen mit einer ebenfalls 26 Symbole aufweisenden ersten Referenztrainingssequenz TSEQR1 korreliert. Vorteilhaft wird damit der Übergangsbereich zwischen dem Bereich der Nutzdaten ND1 einerseits und dem Bereich der Trainingssequenz TSEQ andererseits nicht betrachtet.

In einem ersten Schritt mit i=1 wird ein auf ein Betrachtungsfenster BF bezogenes erstes Korrelationsprodukt gebildet:

$$C_{1,26} = TSEQ \otimes TSEQR1_{1,26}$$

Die erste Referenztrainingssequenz TSEQR1 wird bei weiteren Schritten mit i=2,..., 9 jeweils um ein Symbol verschoben, wobei jeweilige auf das Betrachtungsfenster BF bezogene Korrelationsprodukte $C_{i,26}$ gebildet werden:

$$C_{2,26} = TSEQ \otimes TSEQR1_{2,26}$$

$$C_{3,26} = TSEQ \otimes TSEQR1_{3,26}$$

$$....$$

$$C_{9,26} = TSEQ \otimes TSEQR1_{9,26}$$

Die Abkürzung $\otimes$ bedeutet dabei "korreliert mit".

Bei den Schritten i=2, ..., 9 werden in der ersten Referenztrainingssequenz TSEQR1, bezogen auf das Betrachtungsfenster BF, mit "0" markierte Symbole jeweils schrittweise nachgeführt, wodurch im zweiten Schritt i=2 lediglich die mit "1" bis "25" markierten Symbole einen Beitrag zur Berechnung des Korrelationsprodukts $C_{2,26}$ bilden. Entsprechend bilden im neunten Schritt i=9 lediglich die mit "1" bis "18" markierten Symbole einen Beitrag zur Berechnung des Korrelationsprodukts $C_{9,26}$.

Die einzelnen Korrelationsprodukte $C_{1,26}$ bis $C_{9,26}$ werden gegebenenfalls normiert und aufsummiert. Es ergibt sich ein zeitabhängiger erster Subkorrelationswert C1, der in FIG 1b dargestellt ist.

Simulationen haben gezeigt, dass bei einer derartigen empfangenen Trainingssequenz TSEQ die Bildung weiterer Korrelationsprodukte in weiteren Schritten mit i>9 keine Verbesserungen im Endergebnis verursachen.

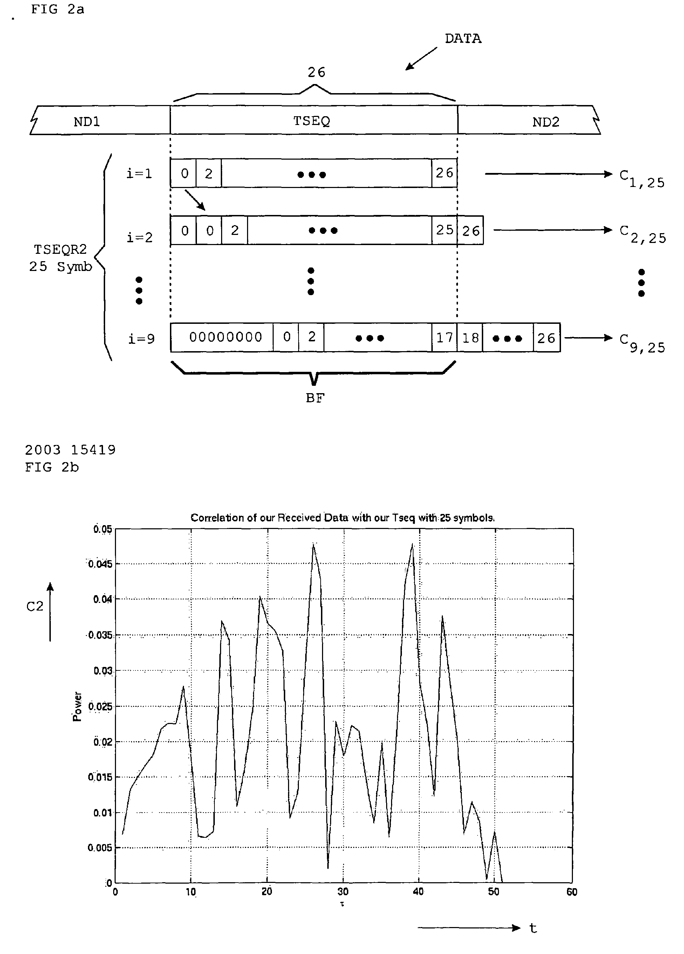

FIG 2 zeigt einen prinzipiellen Ablauf einer zweiten Subkorrelation in FIG 2a mit zugeordnetem zweiten zeitabhängigen Subkorrelationswert C2 in FIG 2b.

Bei der zweiten Subkorrelation wird die 26 Symbole aufweisende empfangene Trainingssequenz TSEQ mit einer 25 Symbole aufweisenden zweiten Referenztrainingssequenz TSEQR2 korreliert. Im Bezug auf die erste Referenztrainingssequenz TSEQR1 aus FIG 1 wurde bei i=1 ein mit "0" markiertes Symbol der zweiten Referenztrainingssequenz TSEQR2 derart ersetzt, dass es keinen Beitrag zur Berechnung der nachfolgenden Korrelationsprodukte $C_{i,25}$ bildet.

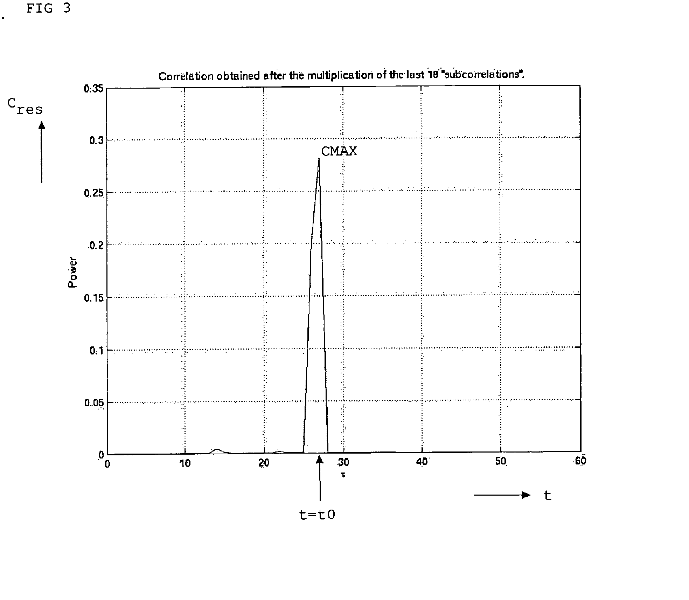

Durch die Wahl dieses Symbols wird besonders vorteilhaft im Übergangsbereich zwischen Trainingssequenz TSEQ und den Nutzdaten ND1 kein Beitrag zur Berechnung des in FIG 3 dargestellten resultierenden Korrelationswerts Cres gebildet.

In einem ersten Schritt mit i=1 wird ein auf das Betrachtungsfenster BF bezogenes erstes Korrelationsprodukt gebildet:

$$C_{1,25} = TSEQ \otimes TSEQR1_{1,25}$$

Die zweite Referenztrainingssequenz TSEQR2 wird bei weiteren Schritten mit i=2,..., 9 jeweils um ein Symbol verschoben, wobei jeweilige auf das Betrachtungsfenster BF bezogene Korrelationsprodukte $C_{i,25}$ gebildet werden:

$$C_{2,25} = TSEQ \otimes TSEQR1_{2,25}$$

$$C_{3,25} = TSEQ \otimes TSEQR1_{3,25}$$

$$....$$

$$C_{9,25} = TSEQ \otimes TSEQR1_{9,25}$$

Bei den Schritten i=2, ..., 9 werden in der zweiten Referenztrainingssequenz TSEQR1, bezogen auf das Betrachtungsfenster BF, wiederum mit "0" markierte Symbole jeweils schrittweise nachgeführt, wodurch im zweiten Schritt i=2 lediglich die mit "2" bis "25" markierten Symbole einen Beitrag zur Berechnung des Korrelationsprodukts $C_{2,25}$ bilden. Entsprechend bilden im neunten Schritt i=9 lediglich die mit "2" bis "17" markierten Symbole einen Beitrag zur Berechnung des Korrelationsprodukts $C_{9,25}$.

Die einzelnen Korrelationsprodukte $C_{1,25}$ bis $C_{9,25}$ werden gegebenenfalls normiert und aufsummiert. Es ergibt sich ein zweiter zeitabhängiger Subkorrelationswert C2, der in FIG 2b dargestellt ist.

Eine Berechnung weiterer, hier nicht näher dargestellter, zeitabhängiger Subkorrelationswerte C3, C4, ..., usw. erfolgt auf gleiche Weise. So wird bei einer dritten Subkorrelation die 26 Symbole aufweisende empfangene Trainingssequenz TSEQ mit einer 24 Symbole aufweisenden dritten Referenztrainingssequenz TSEQR3 zur Bildung eines dritten Subkorrelationswerts C3 korreliert, usw.

FIG 3 zeigt einen in Bezug auf FIG 1 und FIG 2 resultierenden Korrelationswert $C_{res}$, der durch eine multiplikative Überlagerung mehrerer zeitabhängiger Subkorrelationswerte C1, C2, ..., usw. der Subkorrelationen gebildet wird.

Durch die multiplikative Überlagerung der Subkorrelationswerte C1, C2, ..., usw. werden störende Korrelationswerte unterdrückt, wodurch zu einem eindeutigen Zeitpunkt t=t0 ein maximaler Korrelationswert CMAX detektierbar ist. Der maximale Korrelationswert CMAX zeigt die zeitliche Synchronisierung der empfangenen Trainingssequenz TSEQ mit der ersten Referenztrainingssequenz TSEQR1 an.

Beim Vergleich der Berechnungen der Subkorrelationsprodukte in den Figuren FIG 1a und FIG 2a ist eine rekursive Beziehung zu beobachten, für die gilt:

$$C_{1,25} = C_{1,26} - P1,$$

$$C_{2,25} = C_{2,26} - P1^{I},$$

$$...$$

$$C_{9,25} = C_{9,26} - P_1^{IX}$$

wobei P1, P1$^{I}$, ..., P1$^{IX}$ Partialprodukte bezeichnet, die man erhält, wenn das erste Korrelationsprodukt $C_{1,26}$ der ersten Subkorrelation berechnet wird.

Diese rekursive Beziehung ist auf die Berechnung der weiteren Korrelationsprodukte bei den einzelnen Subkorrelationen erweiterbar. Besonders vorteilhaft werden die jeweiligen Partialprodukte in einer Matrix abgespeichert und stehen somit bei den jeweiligen Berechnung der Korrelationsprodukte sofort zur Verfügung. Bei der Berechnung der Korrelationsprodukte wird auf diese Matrix wiederholt zugegriffen und Rechenzeit eingespart.

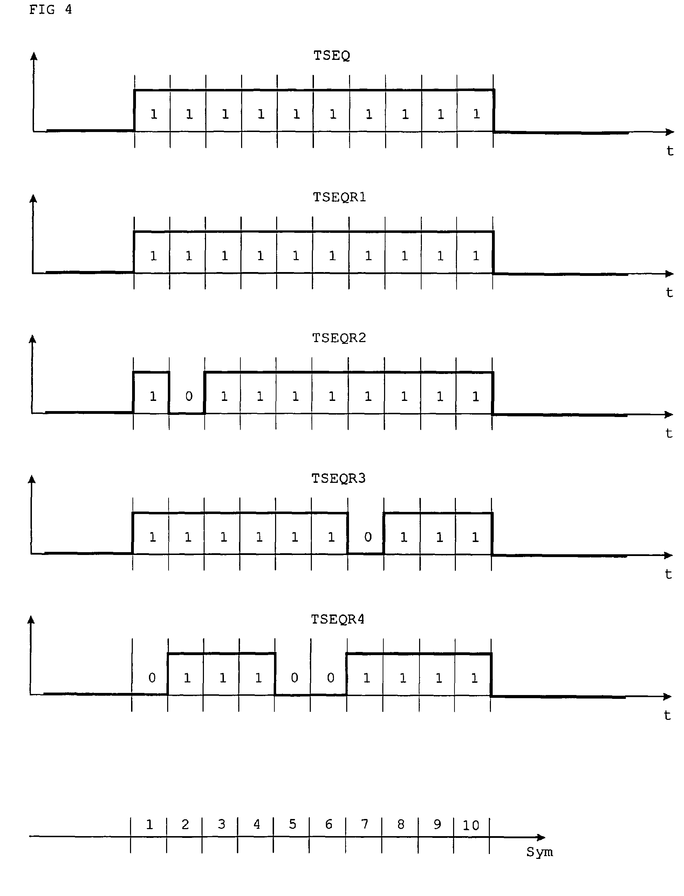

Abschließend zeigt FIG 4 eine beispielhafte Variation der Referenztrainingssequenzen TSEQR in Bezug auf eine empfangene Trainingssequenz TSEQ.

Bei den oben genannten Beispielen in FIG 1 und FIG 2 wurden jeweils aufeinanderfolgende Symbole der Trainingssequenz TSEQR1, TSEQR2, ..., usw. derart belegt bzw. ausgeschnitten, dass sie keinen Beitrag zur Bildung des Korrelationsprodukts leisteten.

Beim erfindungsgemäßen Verfahren ist es jedoch insbesondere möglich, eine beliebige Anzahl an Symbolen an verschiedenen Positionen entsprechend zu belegen bzw. auszuschneiden.

In dem in FIG 4 dargestellten stark vereinfachten Beispiel weist die empfangene Trainingssequenz TSEQ zehn aufeinanderfolgende logische Werte auf. Eine erste Subkorrelation wird dann beispielsweise mit einer ersten Referenztrainingssequenz TSEQR1 durchgeführt, deren Symbole den Symbolen der Trainingssequenz TSEQ entsprechen.

Eine zweite Subkorrelation wird dann beispielsweise mit einer zweiten Referenztrainingssequenz TSEQR2 durchgeführt, wobei einem Symbol Sym=2 eine logische "0" zugewiesen wurde, während die anderen Symbole den Symbolen der Trainingssequenz TSEQ entsprechen.

Eine dritte Subkorrelation wird mit einer dritten Referenztrainingssequenz TSEQR3 durchgeführt, wobei einem Symbol Sym=7 eine logische "0" zugewiesen wurde, während die anderen Symbole den Symbolen der Trainingssequenz TSEQ entsprechen.

Eine vierte Subkorrelation wird mit einer vierten Referenztrainingssequenz TSEQR4 durchgeführt, wobei Symbolen Sym=1, Sym=5 und Sym=6 jeweils eine logische "0" zugewiesen wurde, während die anderen Symbole den Symbolen der Trainingssequenz TSEQ entsprechen.

Zusammengefasst werden die Subkorrelationen mit Referenztrainingssequenzen durchgeführt, deren Symbole nur teilweise den Symbolen der empfangenen Trainingssequenz entsprechen, während verbleibende Symbole derart belegt werden, dass sie keinen Beitrag bei der Berechnung von Subkorrelationswerten bilden.

Vorteilhaft werden Übergänge zwischen Nutzdatenbereichen und Trainingsequenzbereich ausgeblendet.

**Patentansprüche**

1.  Verfahren zur Bestimmung einer zeitlichen Synchronisation zwischen einer empfangenen Trainingssequenz (TSEQ) und einer Referenztrainingssequenz (TSEQR) in einem Funkkommunikationssystem,

    -   bei dem bei einer ersten Subkorrelation die empfangene Trainingssequenz (TSEQ) mit einer ersten Referenztrainingssequenz (TSEQR1) korreliert wird, wobei die erste Trainingssequenz zumindest teilweise mit der empfangenen Trainingssequenz (TSEQ) übereinstimmt, und aus dabei gebildeten Korrelationsprodukten ($C_{1,26}$, $C_{2,26}$, ...) ein zeitabhängiger erster Subkorrelationswert (C1) bestimmt wird,

    -   bei dem bei zumindest einer weiteren Subkorrelation die empfangene Trainingssequenz (TSEQ) mit einer weiteren Referenztrainingssequenz (TSEQR2) korreliert wird, wobei die weitere Referenztrainingssequenz (TSEQR2) teilweise mit der empfangenen Trainingssequenz (TSEQ) übereinstimmt, und aus dabei gebildeten Korrelationsprodukten ($C_{1,25}$, $C_{2,25}$, ...) ein weiterer zeitabhängiger Subkorrelationswert (C2) bestimmt wird, und

    -   bei dem der erste und der zumindest eine weitere Subkorrelationswert (C1, C2) zur Bestimmung der zeitlichen Synchronisation zu einem resultierenden Korrelationswert (Cres) überlagert werden.

2.  Verfahren nach Anspruch 1, bei dem zur Bestimmung des resultierenden Korrelationswerts (Cres) die berechneten Subkorrelationswerte (C1, C2) durch Multiplikation überlagert werden.

3.  Verfahren nach Anspruch 1 oder 2, bei dem sich die Referenztrainingssequenzen (TSEQR1, TSEQR2) der einzelnen Subkorrelationen voneinander unterscheiden.

4.  Verfahren nach Anspruch 3, bei dem Symbole der Referenztrainingssequenzen (TSEQR1, TSEQR2) derart gewählt werden,

    -   dass deren Anzahl der Symbolanzahl der empfangenen Trainingssequenz (TSEQ) entspricht, eine Teilanzahl der Symbole jedoch im Vergleich zu den Symbolen der empfangenen Trainingssequenz (TSEQ) andere Symbolwerte aufweist, und/oder

    -   dass deren Anzahl gegenüber der Symbolanzahl der empfangenen Trainingssequenz (TSEQ) verringert ist, jedoch vergleichbare Symbole der empfangenen Trainingssequenz (TSEQ) und der Referenztrainingssequenz (TSEQR1, TSEQR2) jeweils gleiche Symbolwerte aufweisen.

5.  Verfahren nach einem der vorhergehenden Ansprüche, bei dem die Subkorrelationen (C1, C2) bis zum Erreichen einer vorgegebenen Genauigkeit beim resultierenden Korrelationswert (Cres) durchgeführt werden.

6.  Verfahren nach Anspruch 4 oder 5, bei dem die Symbole der Referenztrainingssequenz (TSEQR1, TSEQR2) derart gewählt werden, dass eine Symbolanzahl keinen Beitrag zur Berechnung der Subkorrelationswerte bildet.

7.  Verfahren nach einem der vorhergehenden Ansprüche,

    -   bei dem die Trainingssequenz (TSEQ) als Teil eines Datenblocks (DATA) mit zumindest einem an die Trainingssequenz anschließenden Nutzdatenbereich (ND1, ND2) empfangen wird,

    -   bei dem die Referenztrainingssequenzen (TSEQR1, TSEQR2) derart gewählt werden, dass ein Übergangsbereichzwischen Nutzdatenbereich (ND1, ND2) und Trainingssequenz (TSEQ) keinen Beitrag zur Bildung des resultierenden Korrelationswertes (Cres) bildet.

FIG 1a

2003 15419
FIG 1b

FIG 2a

2003 15419
FIG 2b

FIG 3

Correlation obtained after the multiplication of the last 18 "subcorrelations".

$C_{res}$

CMAX

t=t0

t

FIG 4

TSEQ

TSEQR1

TSEQR2

TSEQR3

TSEQR4

FIG 5

DATA

| ND1 | TSEQ | ND2 |
|-----|------|-----|

1                                                                        156

26

t=t0-1    TSEQR

t=t0         TSEQR

t=t0+1         TSEQR

26

2003 15419

FIG 6

Correlation of Receive Data with Training Sequence:

CMAX

CW1    CW2         CW3    CW4

C

Power

t=t0

t

# EP 1 564 926 A1

**Europäisches Patentamt**

## EUROPÄISCHER RECHERCHENBERICHT

Nummer der Anmeldung

EP 04 00 3531

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 701 334 A (NOKIA MOBILE PHONES LTD) 13. März 1996 (1996-03-13) * Zusammenfassung; Abbildungen 2-5 * * Seite 2, Zeile 54 - Seite 4, Zeile 25 * | 1-4 | H04L7/04 |
| Y | --- | 5-7 | |
| X | EP 0 615 352 B (NOKIA MOBILE PHONES LTD) 14. September 1994 (1994-09-14) * Abbildungen 2-5 * * Spalte 2, Zeile 10 - Spalte 7, Zeile 17 * | 1-4 | |
| Y | --- | 5-7 | |
| X | US 5 727 018 A (WOLF ANDREAS ET AL) 10. März 1998 (1998-03-10) * Zusammenfassung; Abbildung 1 * * Spalte 3, Zeile 6 - Spalte 4, Zeile 31 * --- | 1 | |
| X | WO 01/95553 A (GESELL AXEL ;LANKL BERTHOLD (DE); SEBALD GEORG (DE); SIEMENS INF &) 13. Dezember 2001 (2001-12-13) * Zusammenfassung; Abbildung 2 * | 1 | **RECHERCHIERTE SACHGEBIETE (Int.Cl.7)** |
| Y | * Seite 8 - Seite 9 * --- | 6,7 | H04L |
| Y | US 2002/048330 A1 (KAFEMANN HARALD ET AL) 25. April 2002 (2002-04-25) * Zusammenfassung * ----- | 5 | H04J H04B |

Der vorliegende Recherchenbericht wurde für alle Patentansprüche erstellt

| Recherchenort | Abschlußdatum der Recherche | Prüfer |
|---|---|---|
| MÜNCHEN | 7. Juni 2004 | Staeger, R |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 04 00 3531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| EP 0701334 | A | 13-03-1996 | FI | 943803 A | 19-02-1996 |
| | | | EP | 0701334 A2 | 13-03-1996 |
| EP 0615352 | B | 14-09-1994 | FI | 931044 A | 10-09-1994 |
| | | | DE | 69419792 D1 | 09-09-1999 |
| | | | DE | 69419792 T2 | 09-03-2000 |
| | | | EP | 0615352 A1 | 14-09-1994 |
| | | | JP | 6326642 A | 25-11-1994 |
| | | | US | 5479444 A | 26-12-1995 |
| US 5727018 | A | 10-03-1998 | DE | 4318368 C1 | 14-07-1994 |
| | | | CA | 2163777 A1 | 08-12-1994 |
| | | | WO | 9428652 A1 | 08-12-1994 |
| | | | DE | 59409009 D1 | 20-01-2000 |
| | | | EP | 0700611 A1 | 13-03-1996 |
| WO 0195553 | A | 13-12-2001 | WO | 0195553 A1 | 13-12-2001 |
| | | | EP | 1287635 A1 | 05-03-2003 |
| US 2002048330 | A1 | 25-04-2002 | DE | 10051889 A1 | 16-05-2002 |
| | | | AU | 1499702 A | 29-04-2002 |
| | | | WO | 0233878 A2 | 25-04-2002 |

EPO FORM P0461

Für nähere Einzelheiten zu diesem Anhang : siehe Amtsblatt des Europäischen Patentamts, Nr.12/82